# EUROPÄISCHE PATENTANMELDUNG

(11) **EP 1 533 528 A2**
(43) Veröffentlichungstag der Anmeldung: **25.05.2005**
(21) Anmeldenummer: 04105337.2
(22) Anmeldetag: 27.10.2004
(51) Int. Cl.: F04D 29/22

(54) **Verfahren zur Herstellung eines Laufrades für eine Kreiselpumpe**

(30) Priorität: 21.11.2003 DE 10354750
(71) Anmelder: SIEMENS AKTIENGESELLSCHAFT, 80333 München (DE)
(72) Erfinder: Mann, Thomas, 61130, Nidderau-Windecken (DE)

(57) **Zusammenfassung**

Bei dem Verfahren wird ein erstes Teil (1), das aus der hinteren Deckscheibe (1'') mit Anschlussstück (1a) für den Antrieb besteht, an der an ihrer dem Anschlussstück (1a) abgewandten Seite Schaufeln (1*) angeordnet sind, die an ihren, der hinteren Deckscheibe (1") abgewandten Kanten (1b) mindestens teilweise mit einem Ansatz (1') verbunden sind, der eine Teil der vorderen Deckscheibe darstellt und der an seiner, die Längsachse umlaufenden Außenfläche zylinderförmig begrenzt ist, wobei der Außendurchmesser D dem Innendurchmesser des Saugstutzens entspricht, in einem Spritz- oder Gießverfahren als Einzelteil hergestellt. Anschließend wird ein zweites Teil (2), das den restlichen Teil der vorderen Deckscheibe darstellt und kreisförmig mit einem Innendurchmesser, der dem Außendurchmesser D entspricht ausgebildet ist, auf den Ansatz (1') des ersten Teiles (1) aufgeschoben, bis es an den noch freistehenden Bereichen der der hinteren Deckscheibe (1'') abgewandten Kanten (1b) der Schaufeln (1*) anliegt. Anschließend wird das zweite Teil (2) mit dem Ansatz (1') oder den Kanten (1b) der Scha ufeln (1*) verbunden.

## Beschreibung

Laufräder für Kreiselpumpen sind bekannt. In "Grundlagen für die Planung von Kreiselpumpenanlagen, Fritz Brüchler, Dennis Carter, Peter Fandray, Jan Fischer, Ralf Mann, 7. überarbeitete und erweiterte Auflage 2000, Sterling SIHI GmbH, Seite 44" wird auf verschiede Laufradformen hingewiesen. So unterscheidet man beispielsweise Radialräder und Halbaxialräder. Häufig bestehen Laufräder für Kreiselpumpen aus einer hinteren Deckscheibe und einer vorderen Deckscheibe, zwischen denen Schaufeln für das zu fördernde Medium angeordnet sind. Für die Serienfertigung ist eine Fertigung solcher Laufräder, die für viele Einsatzzwecke in vorteilhafter Weise aus Kunststoff bestehen, durch das Spritzgießverfahren besonders wünschenswert, was jedoch nicht möglich ist. Der Grund dafür liegt in der relativ konstruktiv aufwendigen Ausgestaltung der hinteren Deckscheibe, der vorderen Deckscheibe und insbesondere der zwischen diesen beiden angeordneten Schaufeln. Diese konstruktive Ausgestaltung erschwert das Ausfahren der Spritzwerkzeuge aus dem so hergestellten Laufrad, bzw. macht dies völlig unmöglich.

Der Erfindung liegt daher die Aufgabe zugrunde, ein Verfahren zur Herstellung eines Laufrades für eine Kreiselpumpe zu schaffen, bei dem es möglich ist, einen möglichst großen Masseanteil des Laufrades als Einzelteil in einem Spritz - oder Gießverfahren herzustellen.

Die der Erfindung zugrunde liegende Aufgabe wird durch ein Verfahren zur Herstellung eines Laufrades für eine Kreiselpumpe gelöst, bei dem ein erstes Teil, das aus der hinteren Deckscheibe mit Anschlussstück für den Antrieb besteht, an der an ihrer dem Anschlussstück abgewandten Seite Schaufeln angeordnet sind, die an ihren, der hinteren Deckscheibe abgewandten Kanten mindestens teilweise mit einem Ansatz verbunden sind, der einen Teil der vorderen Deckscheibe darstellt und der an seiner, die Längsachse laufenden Außenfläche zylinderförmig begrenzt ist, wobei der Außendurchmesser D dem Innendurchmesser des Saugstutzens entspricht, in einem Spritz- oder Gießverfahren als Einzelteil hergestellt wird und anschließend ein zweites Teil, das den restlichen Teil der vorderen Deckscheibe darstellt und kreisringförmig mit einem Innendurchmesser, der dem Außendurchmesser D entspricht, ausgebildet ist, auf den Ansatz des ersten Teiles aufgeschoben wird, bis es an den noch freistehenden Bereichen der der hinteren Deckscheibe abgewandten Kanten der Schaufeln anliegt und abschließend mit dem Ansatz oder den Kanten der Schaufeln verbunden wird. Unter der Bezeichnung Laufrad sind radiale oder halbaxiale Laufräder für Kreiselpumpen zu verstehen. Das Anschlussstück für den Antrieb ist in der Regel in Form eines Rohrstutzens ausgebildet. Die Schaufeln sind, an ihren, der hinteren Deckscheibe abgewandten Kanten mindestens teilweise mit einem Ansatz verbunden, wobei die Verbindung im mittleren Bereich erfolgt. Dies bedeutet, dass die Kanten nach außen verlaufend freiliegend sind, somit in ihrem äußeren Bereich nicht mit dem Ansatz verbunden sind. Der Außendurchmesser D entspricht dem Innendurchmesser des Saugstutzens und dem Innendurchmesser des zweiten Teiles, wobei natürlich darunter zu verstehen ist, dass die entsprechenden Toleranzen, die einerseits erforderlich sind, das erste Teil in den Saugstutzen einzuführen und andererseits das zweite Teil auf das erste Teil aufzuschieben, eingehalten werden müssen. Das zweite Teil wird ebenfalls im Spritz - oder Gießverfahren hergestellt. Sowohl das erste Teil als auch das zweite Teil kann aus Kunststoff oder einem metallischen Werkstoff bestehen, wobei der Kunststoff für viele Einsatzzwecke des Laufrades der bevorzugte Werkstoff darstellt. Das zweite Teil ist kreisringförmig gestaltet, wobei in der Regel jedoch ein konischer Verlauf, besonders der Außenfläche des zweiten Teiles, aus strömungstechnischen Gründen angestrebt wird. Das Verbinden des ersten Teiles mit dem zweiten Teil kann beispielsweise durch Kleben erfolgen. Dabei ist es in der Regel möglich, eine Verbindung mit dem Ansatz oder den Kanten oder sowohl mit dem Ansatz als auch den Kanten zu realisieren. Es hat sich in überraschender Weise gezeigt, dass sich mit dem Verfahren zur Herstellung eines Laufrades für eine Kreiselpumpe nahezu das ganze Laufrad nach dem Spritz- oder Gießverfahren als Einzelteil herstellen lässt. Dies kann in der Regel in einem einzigen Arbeitsschritt erfolgen. Lediglich ein geringer Masse anteil des Laufrades, der durch das zweite Teil gebildet wird, muss separat hergestellt und mit dem ersten Teil verbunden werden. Bei der Herstellung des ersten Teiles in einem Spritz- oder Gießverfahren ist es problemlos möglich, die Spritzwerkzeuge aus dem fertig hergestellten ersten Teil herauszufahren. Auf diese Weise eignet sich das Verfahren zur Herstellung eines Laufrades für eine Kreiselpumpe in bevorzugter Weise auch für eine Serienfertigung.

Nach einer bevorzugten Ausgestaltung der Erfindung wird das zweite Teil vor dem Aufschieben auf den Ansatz des ersten Teiles mit Nuten versehen, die zu den noch freistehenden Bereichen der der hinteren Deckscheibe abgewandten Kanten der Schaufeln komplementär ausgebildet sind und jede Kante beim Aufschieben des zweiten Teiles in eine Nut eingebracht. Unter der komplementären Ausbildung der Nuten ist zu verstehen, dass sie eine Form aufweisen, die der geschwungenen Form der Kanten der Schaufeln entsprechen, so dass diese Kanten auch passend in die jeweiligen Nuten eingebracht werden können. Es ist beispielsweise möglich, die Nuten direkt bei der Herstellung des zweiten Teiles anzuordnen. Sie können aber auch im Rahmen einer Nachbearbeitung des zweiten Teiles angeordnet werden. Auf diese Weise wird vorteilhaft die Verbindung des ersten Teiles mit dem zweiten Teil verstärkt beziehungsweise verbessert, da durch den Eingriff der Kanten in die komplementär ausgebildeten Nuten eine eigenständige Verbindung geschaffen wird, so dass beispielsweise es für viele Einsatzzwecke nicht mehr erforderlich ist im äußeren Bereich der Kanten der Schaufeln zusätzliche Verbindungsmittel, wie beispielsweise Klebstoffe anzuordnen.

Gemäß einer weiteren bevorzugten Ausgestaltung der Erfindung erfolgt das Verbinden des ersten Teiles mit dem zweiten Teil durch Schweißen. Sofern das erste Teil und das zweite Teil aus Kunststoff bestehen, eignen sich beispielsweise das Laser- oder das Ultraschallschweißen als Schweißverfahren. Bestehen das erste Teil und das zweite Teil aus schweißbaren Metallen oder Metallverbindungen, so kann das Verbinden besonders bevorzugt durch Widerstandsschweißen erfolgen. Auf diese Weise wird eine besonders vorteilhafte feste Verbindung des ersten Teiles mit dem zweiten Teil erreicht, so dass das Laufrad für eine Kreiselpumpe für eine relativ große Anzahl von Einsatzgebieten geeignet ist.

Die Erfindung wird nachfolgend anhand der Zeichnung (Fig. 1 bis Fig. 6) näher und beispielhaft erläutert.
- Fig. 1: zeigt die Seitenansicht eines nach dem Verfahren hergestellten Laufrades.
- Fig. 2: zeigt ein nach dem Verfahren hergestelltes Laufrad im Längsschnitt.
- Fig. 3: zeigt das erste Teil im Längsschnitt gemäß Fig. 2.
- Fig. 4: zeigt das zweite Teil im Längsschnitt gemäß Fig. 2.
- Fig. 5: zeigt die Draufsicht auf das erste Teil des Laufrades mit Blick auf den Ansatz des ersten Teiles.
- Fig. 6: zeigt die relative Anordnung des ersten Teiles und des zweiten Teiles zueinander in dreidimensionaler Form.

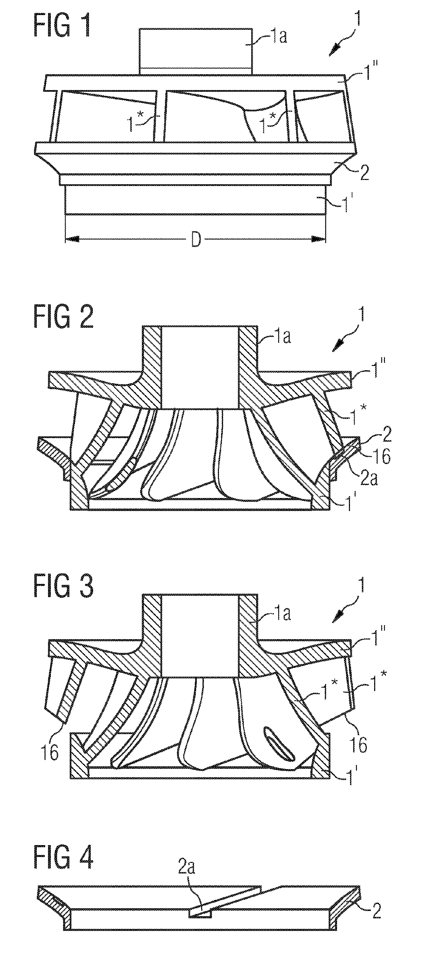

In Fig. 1 ist das Laufrad, das nach dem Verfahren zur Herstellung eines Laufrades für eine Kreiselpumpe hergestellt wurde, in der Seitenansicht dargestellt. Das Laufrad weist ein erstes Teil 1 auf, das aus der hinteren Deckscheibe 1" mit Anschlussstück 1a für den Antrieb besteht. An der hinteren Deckscheibe 1" sind an ihrer dem Anschlussstück 1a abgewandten Seite Schaufeln 1* angeordnet, die an ihren, der hinteren Deckscheibe 1" abgewandten Kanten (nicht dargestellt) mindestens teilweise mit einem Ansatz 1' verbunden sind. Dieser Ansatz 1' stellt einen Teil der vorderen Deckscheibe dar. Er ist an seiner, die Längsachse umlaufenden Außenfläche zylinderförmig begrenzt, wobei der Außendurchmesser D dem Innendurchmesser des Saugstutzens (nicht dargestellt) entspricht. Das erste Teil 1 wird in einem Spritz- oder Gießverfahren als Einzelteil hergestellt. Das Laufrad weist ferner ein zweites Teil 2 auf, das den restlichen Teil der vorderen Deckscheibe darstellt und kreisförmig mit einem Innendurchmesser, der dem Außendurchmesser D entspricht, ausgebildet ist. Bei dem Verfahren wird das zweite Teil 2 auf den Ansatz 1' des ersten Teiles 1 aufgeschoben, bis es an noch freistehenden Bereichen der der hinteren Deckscheibe 1" abgewandten Kanten (nicht dargestellt) der Schaufeln 1* anliegt. Anschließend erfolgt ein Verbinden des ersten Teiles 1 mit dem zweiten Teil 2.

In Fig. 2 ist das Laufrad im Längsschnitt dargestellt. Das erste Teil 1 ist mit Schaufeln 1* versehen, die an ihren, der hinteren Deckscheibe 1" abgewandten Kanten 1b mindestens teilweise mit einem Ansatz 1' verbunden sind. Dabei bleiben die äußeren Bereiche der der hinteren Deckscheibe 1" abgewandten Kanten 1b freiliegend, sind also nicht mit dem Ansatz 1' verbunden. Das zweite Teil 2 wird vor dem Aufschieben auf den Ansatz 1' des ersten Teiles 1 mit Nuten 2a versehen, die zu den noch freistehenden Bereichen der der hinteren Deckscheibe 1" abgewandten Kanten 1b der Schaufeln 1* komplementär ausgebildet sind. So wird jede Kante 1b beim Aufschieben des zweiten Teiles 2 in eine Nut 2a eingebracht.

In Fig. 3 ist das erste Teil 1 gemäß Fig. 2 im Längsschnitt dargestellt. Im Vergleich zum zweiten Teil (nicht dargestellt) stellt das erste Teil 1 den größten Masse anteil des Laufrades dar, der im Spritz- oder Gießverfahren als Einzelteil hergestellt werden kann, wobei ein Ausfahren der Spritzwerkzeuge (nicht dargestellt) aus dem fertig hergestellten ersten Teil 1 problemlos möglich ist.

In Fig. 4 ist das zweite Teil 2 des Laufrades im Längsschnitt gemäß Fig. 2 dargestellt. Es ist kreisförmig mit außen konischem Verlauf ausgebildet und weist einen Innendurchmesser auf, der dem Außendurchmesser D gemäß Fig. 1 entspricht. Dabei ist es selbstverständlich, dass entsprechende Toleranzen eingehalten werden, so dass ein Aufschieben des zweiten Teiles 2 auf das erste Teil (nicht dargestellt) möglich ist.

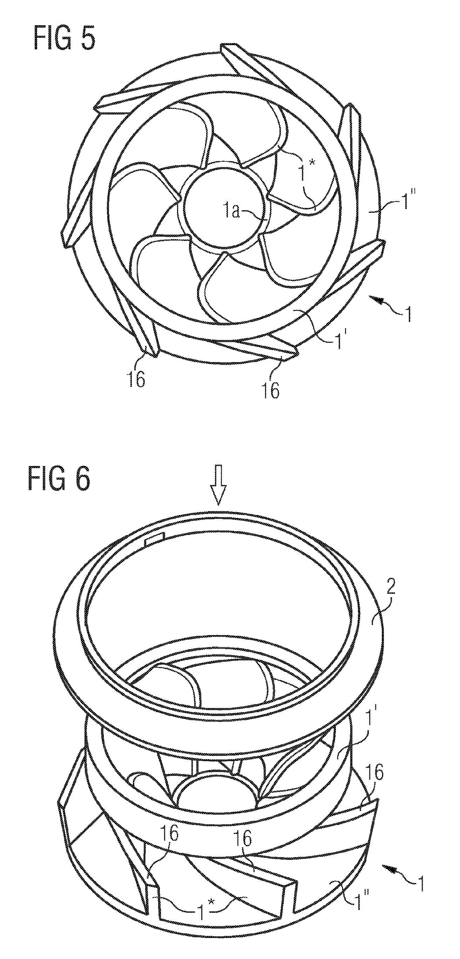

In Fig. 5 ist die Draufsicht auf das erste Teil 1 des Laufrades mit direktem Blick auf den Ansatz 1' dargestellt. Dabei wird deutlich, dass die äußeren Bereiche der der hinteren Deckscheibe 1" abgewandten Kanten 1b frei bleiben, also nicht mit dem Ansatz 1' verbunden sind. Bei dem Anschlussstück 1a handelt es sich in der Regel um einen Rohrstutzen. Es ist jedoch auch möglich das Ans chlussstück 1a als ringförmige Versteifung der hinteren Deckscheibe 1" auszubilden.

In Fig. 6 ist die relative Anordnung des ersten Teiles 1 zu dem zweiten Teil 2 dreidimensional dargestellt. Nachdem das erste Teil 1 in einem Spritz- oder Gießverfahren hergestellt wurde, wird das zweite Teil 2, das den restlichten Teil der vorderen Deckscheibe darstellt, auf den Ansatz 1' des ersten Teiles 1 in Pfeilrichtung aufgeschoben, bis es an den noch freistehenden Bereichen der der hinteren Deckscheibe 1" abgewandten Kanten 1b der Schaufeln 1* anliegt. Abschließend erfolgt dann eine Verbindung mit dem Ansatz 1' oder den Kanten 1b der Schaufeln 1* (nicht dargestellt) .

## Patentansprüche

1. Verfahren zur Herstellung eines Laufrades für eine Kreiselpumpe, bei dem ein erstes Teil (1), das aus der hinteren Deckscheibe (1") mit Anschlussstück (1a) für den Antrieb besteht, an der an ihrer dem Anschlussstück (1a) abgewandten Seite Schaufeln (1*) angeordnet sind, die an ihren, der hinteren Deckscheibe (1") abgewandten Kanten (1b) mindestens teilweise mit einem Ansatz (1') verbunden sind, der einen Teil der vorderen Deckscheibe darstellt und der an seiner, die Längsachse umlaufenden Außenfläche zylinderförmig begrenzt ist, wobei der Außendurchmesser D dem Innendurchmesser des Saugstutzens entspricht, in einem Spritz - oder Gießverfahren als Einzelteil hergestellt wird und anschließend ein zweites Teil (2), das den restlichen Teil der vorderen Deckscheibe darstellt und kreisringförmig mit einem Innendurchmesser, der dem Außendurchmesser D entspricht ausgebildet ist, auf den Ansatz (1') des ersten Teiles (1) aufgeschoben wird, bis an den noch freistehenden Bereichen der der hinteren Deckscheibe (1") abgewandten Kanten (1b) der Schaufeln (1*) anliegt und abschließend mit dem Ansatz (1') oder den Kanten (1b) der Schaufeln (1*) verbunden wird.

2. Verfahren nach Anspruch 1, bei dem das zweite Teil (2) vor dem Aufschieben auf den Ansatz (1') des ersten Teiles (1) mit Nuten (2a) versehen sind, die zu den noch freistehenden Bereichen der der hinteren Deckscheibe (1") abgewandten Kanten (1b) der Schaufeln (1*) komplementär ausgebildet sind und jede Kante (1b) beim Aufschieben des zweiten Teiles (2) in eine Nut (2a) eingebracht wird.

3. Verfahren nach Anspruch 1 oder Anspruch 2, bei dem das Verbinden des ersten Teiles (1) mit dem zweiten Teil (2) durch Schweißen erfolgt.
